# EUROPEAN PATENT APPLICATION

(11) **EP 4 506 276 A1**
(43) Date of publication of application: **12.02.2025**
(21) Application number: 22936281.9
(22) Date of filing: 21.06.2022
(51) Int. Cl.: B65D 43/06, B65D 41/18, B65D 13/00, B65D 1/22, A47G 19/22

(54) **PULP MOLDED CONTAINER LID, CONTAINER ASSEMBLY AND PROCESSING PROCESS**

(30) Priority: 08.04.2022 CN 202210368849
(71) Applicant: Shurcon Manufacturing (Zhejiang) Co., Ltd, Jiaxing, Zhejiang 314117 (CN)
(72) Inventor: WAN, Ling, Jiaxing, Zhejiang 314117 (CN); HUANG, Haifeng, Jiaxing, Zhejiang 314117 (CN); WANG, Zhufeng, Jiaxing, Zhejiang 314117 (CN)
(74) Representative: Herrero & Asociados, S.L.
(86) International application number: PCT/CN2022/099986
(87) International publication number: WO 2023/193348

(57) **Abstract**

The present invention belongs to the technical field of pulp molding, and particularly relates to a pulp molded container cover, a container assembly and a processing method, overcoming defects of unreasonable design and the like in the prior art. The pulp molded container cover includes a cover top portion and a lateral inclined wing portion connected to an outer edge of the cover top portion. The pulp molded container cover further includes an outward downwardly inclined portion connected to a lower side of the lateral inclined wing portion and formed an acute included angle with an axial line of the lateral inclined wing portion; an external coupling arc portion connected to an outer edge of the outward downwardly inclined portion; and a lateral wing portion connected to a lower side of the external coupling arc portion facing away from the outwardly and downwardly inclined portion. A lower inclined surface of the outward downwardly inclined portion and an inner circular arc surface of the external coupling arc portion are connected to form a continuous sealing surface sealed with a container top portion. The present application has an advantage of improved sealing performance.

## Description

### TECHNICAL FIELD

The invention relates to the field of pulp molding technologies, and more particularly to a pulp molded container cover, a container assembly, and a processing method.

### BACKGROUND

Containers manufactured by pulp molding include cups, bowls, dishes, and covers for corresponding containers.

In order to improve sealing performance of an existing cover with a container and prevent the existing cover from falling off, a lateral inner wall of the cover is designed with an inner convex portion to form a coupling with an open end of the container.

In the related art, a top portion of the open end of the container and the cover are in contact with each other through abutting against of multiple contact points, that is, corresponding engaging positions of a coupling portion of the open end of the container and the cover employ top contact points and lateral contact points, and in this situation, gaps located between the top contact points and the lateral contact points are formed at corresponding positions of an outer wall of the coupling portion and the cover. The defects of this engaging method are that the sealing performance is poor and the demolding efficiency of the cover is degraded.

### SUMMARY

In view of the above-mentioned problems, an objective of the invention is to provide a pulp molded container cover, a container assembly, and a processing process, which can solve the above technical problems.

In order to achieve the above objective, the invention adopts the following technical solutions.

Specifically, the pulp molded container cover includes a cover top portion, and a lateral inclined wing portion connected to an outer edge of the cover top portion. The pulp molded container cover further includes: an outward downwardly inclined portion, an external coupling arc portion, and a lateral wing portion.

The outward downwardly inclined portion is connected to a lower side of the lateral inclined wing portion, and an acute included angle is formed between the outward downwardly inclined portion and an axial line of the lateral inclined wing portion.

The external coupling arc portion is connected to an outer edge of the outward downwardly inclined portion.

The lateral wing portion is connected to a lower side of the external coupling arc portion facing away from the outward downwardly inclined portion.

A lower inclined surface of the outward downwardly inclined portion and an inner circular arc surface of the external coupling arc portion are connected to form a continuous sealing surface continuously face-to-face sealed with a container top portion.

In the pulp molded container cover, an arc length of the inner circular arc surface is longer than a length of the lower inclined surface.

In the pulp molded container cover, the lower inclined surface is tangentially connected to the inner circular arc surface.

In the pulp molded container cover, the outward downwardly inclined portion has an upper inclined surface parallel to the lower inclined surface.

In the pulp molded container cover, the external coupling arc portion has an outer circular arc surface, a circle center of the outer circular arc surface coincides with a circle center of the inner circular arc surface, and the upper inclined surface is tangentially connected to the outer circular arc surface.

In the pulp molded container cover, an inner wall of the lateral wing portion has an inward convex portion integrally formed with the lateral wing portion, and a position at of an outer wall of the lateral wing portion opposite to the inward convex portion is formed with a roll-pressed annular groove formed by rolling to make an inner diameter of the inward convex portion be reduced.

In the pulp molded container cover, a position at the inner wall of the lateral wing portion opposite to the roll-pressed annular groove is formed with a roll-pressed inner convex portion by roll-pressing the roll-pressed annular groove.

In the pulp molded container cover, the lateral wing portion is arranged in a downwardly inclined and outward extended manner, and an inclination angle of the lateral wing portion is the same as an inclination angle of the lateral inclined wing portion.

In the pulp molded container cover, the lateral wing portion is vertically downward extended.

The invention also provides a pulp molded container assembly, including a container. A top open end of the container is disposed with an internal coupling arc portion curled outward. The pulp molded container assembly further includes the pulp molded container cover, the pulp molded container cover is disposed covering the top open end of the container, and the internal coupling arc portion is continuously abutted against and sealed with the continuous sealing surface of the pulp molded container cover.

In the pulp molded container assembly, the internal coupling arc portion has an upper circular arc surface, the lower inclined surface of the continuous sealing surface is tangent to the upper circular arc surface, and the inner circular arc surface and the upper circular arc surface are matched with each other.

In the pulp molded container assembly, a side of the internal coupling arc portion facing away from the container abuts against one of the inward convex portion and a roll-pressed inner convex portion formed at the inner wall of the lateral wing portion.

In the pulp molded container assembly, the side of the internal coupling arc portion facing away from the container is disposed with an abutting upright surface, the one of the inward convex portion and the roll-pressed inner convex portion is disposed with an inward protruded arc convex surface, and the abutting upright surface is in tangential contact with the inward protruded arc convex surface.

The invention also provides a processing method of the pulp molded container cover, and the processing method includes:
step S1, wet blank forming, including: sucking slurry and performing cold extrusion molding by using a cold extrusion die to obtain a wet blank container cover, wherein the lower inclined surface and the inner circular arc surface of the wet blank container cover are connected to form the continuous sealing surface continuously sealed with the container top portion, the lateral wing portion of the wet blank container cover is directly molded with the inward convex portion, and an arc length of the inner circular arc surface is longer than a length of the lower inclined surface;
step S2, hot-pressing molding, including: performing hot-pressing molding on the wet blank container cover to obtain a semi-finished pulp molded container cover by using a hot-pressing die; and
step S3, roll-pressing, including: making an axial line of a roller parallel to an axial line of the semi-finished pulp molded container cover and making the roller be in contact with the outer wall of the lateral wing portion, rotating the roller and pressing the outer wall of the lateral wing portion with the roller, and making the semi-finished pulp molded container cover rotate about the axial line of the semi-finished pulp molded container cover, thereby obtaining the roll-pressed annular groove formed on the outer wall of the lateral wing portion and reducing the inner diameter of the inward convex portion under roll-pressing of the roller to obtain the pulp molded container cover.

In the processing method of the pulp molded container cover, the processing method further includes wet blank trimming, including: cutting off an excess edge of the wet blank container cover by an edge cutting knife disposed on the cold extrusion die after the wet blank container cover is formed in the step S1.

In the processing method of the pulp molded container cover, a molding cavity wall of the cold extrusion die is disposed with a water-absorbing material layer.

Compared with the related art, the invention has the following advantages.

By using the design of the lower inclined surface, a circumferential length of the inner circular arc surface can be lengthened. Correspondingly, when a circumferential length of the inner circular arc surface is lengthened, the length of the lower inclined surface is shortened subsequently, and a connecting sealing area with the container top portion can be increased after the circumferential length of the inner circular arc surface is lengthened. In this situation, since the continuous sealing surface is formed, the container top portion and the continuous sealing surface are in face-to-face sealing contact. The advantage of this method is to ensure the tightness and avoid leakage due to the existence of gaps.

The face-to-face continuous sealing method can greatly reduce upward deformation of the continuous sealing surface caused by the container top portion abutting against the continuous sealing surface to thereby ensure the sealing performance. That is, since the outward downwardly inclined portion is outward downwardly inclined, the upward deformation of the external coupling arc portion can be restrained.

### BRIEF DESCRIPTION OF DRAWINGS

FIG. 1 is a schematic top view of a pulp molded container cover according to the invention.
FIG. 2 is a schematic cross-sectional structural view taken along a line G-G in FIG. 1.
FIG. 3 is a schematic enlarged schematic view of a half structure of FIG. 2.
FIG. 4 is a schematic partially enlarged structural view of a portion J in FIG. 2.
FIG. 5 is a schematic structural view of a pulp molded container cover according to a second embodiment of the invention.
FIG. 6 is a schematic structural view of a pulp molded container cover according to a third embodiment of the invention.
FIG. 7 is a schematic structural view of a container assembly according to the invention.
FIG. 8 is a schematic enlarged structural view of a portion A in FIG. 7.
FIG. 9 is a schematic flowchart of a fifth embodiment according to the invention.
FIG. 10 is a schematic structural view of a cold extrusion die according to the invention.
FIG. 11 is a schematic structural view of a hot-pressing die according to the invention.
FIG. 12 is a schematic view of a roller in a disassembled state when the roller does not roll-press a container cover according to the invention.

Description of reference signs: pulp molded container cover 1, cover top portion 10, continuous sealing surface 100, lateral inclined wing portion 11, outward downwardly inclined portion 12, lower inclined surface 120, external coupling arc portion 13, inner circular arc surface 130, outer circular arc surface 131, lateral wing portion 14, inward convex portion 15, roll-pressed annular groove 16, roll-pressed inner convex portion 17, inward protruded arc convex surface 18, container 2, container top portion 20, internal coupling arc portion 21, upper circular arc surface 210, abutting upright surface 211, acute included angle a, cold extrusion die 3, water-absorbing material layer 30, hot-pressing die 4, and roller 5.

### DETAILED DESCRIPTION OF EMBODIMENTS

The following are specific embodiments of the invention, and technical solutions of the invention will be further described in combination with the drawings, but the invention is not limited to these illustrated embodiments.

### First embodiment

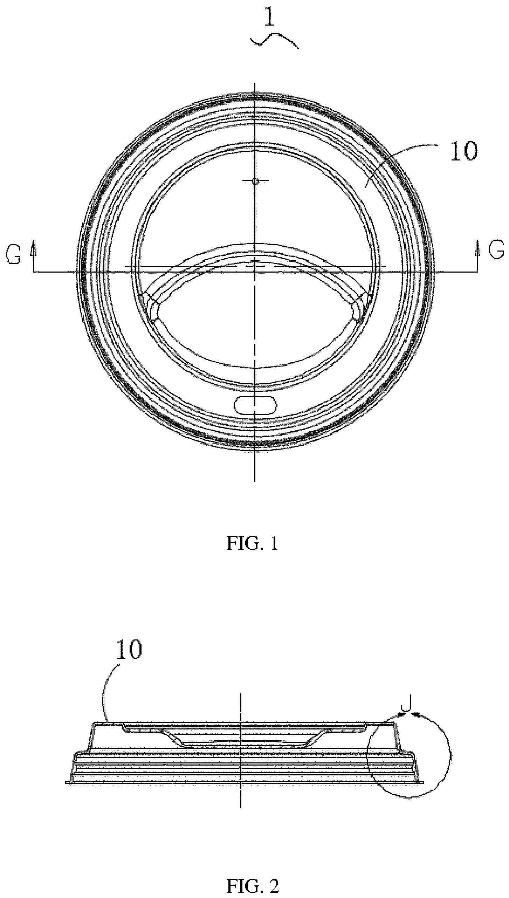

As shown in FIG. 1 to FIG. 3, the pulp molded container cover 1 includes a cover top portion 10, a lateral inclined wing portion 11, an outward downwardly inclined portion 12, an external coupling arc portion 13, and a lateral wing portion 14. The container cover of this embodiment is integrally molded by pulp molding.

The lateral inclined wing portion 11 is connected to an outer edge of the cover top portion 10. The lateral inclined wing portion 11 is actually a conical tube with a diameter gradually increasing from top to bottom.

The outward downwardly inclined portion 12 is connected to a lower side of the lateral inclined wing portion 11, and an acute included angle a is formed between the outward downwardly inclined portion 12 and an axial line of the lateral inclined wing portion 11.

The acute included angle a can facilitate the demolding after cold extrusion molding and hot-pressing molding, so as to improve the production efficiency.

The external coupling arc portion 13 is connected to an outer edge of the outward downwardly inclined portion 12. A unilateral transverse cross-section of the external coupling arc portion 13 is in an arch shape so as to be engaged with the container top portion.

The lateral wing portion 14 is connected to a lower side of the external coupling arc portion 13 facing away from the outward downwardly inclined portion 12. The lateral wing portion 14 is a section that has been sleeved onto the container 2 in advance.

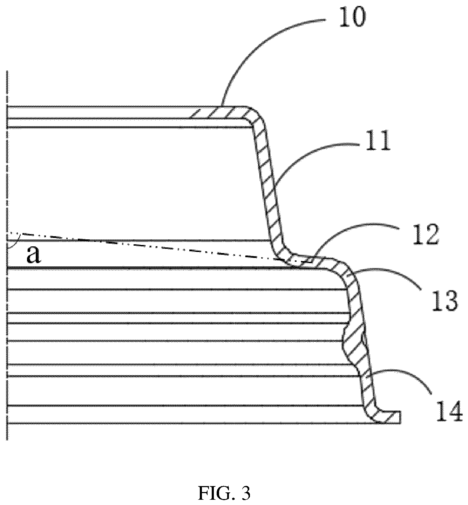

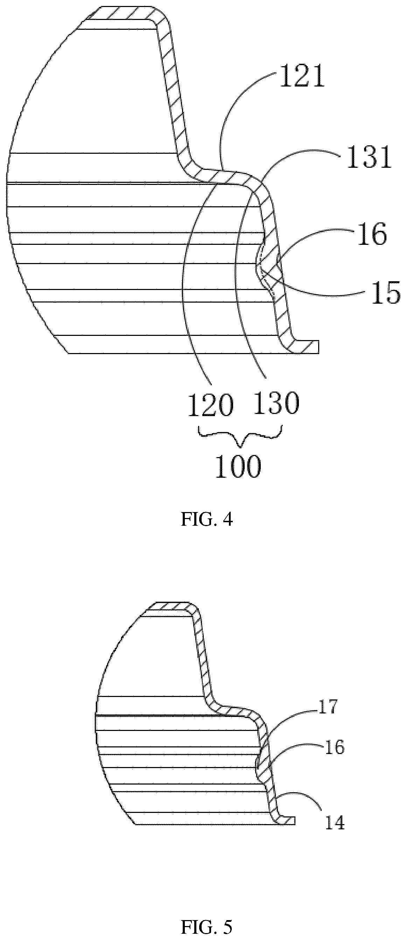

As shown in FIG. 3 and FIG. 4, a lower inclined surface 120 of the outward downwardly inclined portion 12 and an inner circular arc surface 130 of the external coupling arc portion 13 are connected to form a continuous sealing surface 100 that is continuously face-to-face sealed with the container top portion 20.

In this embodiment, by using the design of the lower inclined surface 120, a circumferential length of the inner circular arc surface 130 can be lengthened. Correspondingly, when the circumferential length of the inner circular arc surface 130 is lengthened, a length of the lower inclined surface 120 is shortened subsequently, and a connecting sealing area with the container top portion 20 can be increased after the circumferential length of the inner circular arc surface 130 is lengthened. In this situation, since the continuous sealing surface 100 is formed, the container top portion 20 and the continuous sealing surface 100 are in face-to-face sealing contact. The advantage of this method is to ensure the tightness and avoid leakage due to the existence of gaps.

In addition, the face-to-face continuous sealing method can greatly reduce upward deformation of the continuous sealing surface 100 caused by the container top portion of a container 2 abutting against the continuous sealing surface 100, so as to ensure the sealing performance. That is, since the outward downwardly inclined portion 12 is outward downwardly inclined, the upward deformation of the external coupling arc portion 13 can be restrained.

The design of the lower inclined surface 120 in this embodiment makes an arc length of the inner circular arc surface 130 longer than a length of the lower inclined surface 120, that is, the contact sealing area can be increased and the sealing performance can be improved. In this situation, after the circumferential length of the inner circular arc surface 130 is lengthened, circumferential lengths of a molding concave surface and a molding convex surface of the corresponding die at a position where the inner circular arc surface 130 is formed are also lengthened, the lengthened lengths make die opening and demolding of the die more convenient, and prevents an approximate sharp corner portion being formed due to a short circumferential length of the inner circular arc surface 130, which is not conducive to the molding of the cover and subsequent demolding. In addition, it can also make the processing and molding quality of the cover more stable and reliable, and the generation of cracks at the corresponding position of the cover at the external coupling arc portion 13 is prevented.

Moreover, in order to further provide an optimized design, the lower inclined surface 120 is tangentially connected to the inner circular arc surface 130 of this embodiment to thereby facilitate demolding, and in this case, the corresponding position of the cover is continuous connected in face-to-face manner, which can prevent scratches and other problems when the lower inclined surface 120 and the inner circular arc surface 130 are engaged during demolding.

In an embodiment, the outward downwardly inclined portion 12 has an upper inclined surface 121 parallel to the lower inclined surface 120, so as to facilitate molding processing and manufacturing, and ensure the structural strength of the cover.

In an embodiment, as shown in FIG. 3 and FIG. 4, the external coupling arc portion 13 has an outer circular arc surface 131 whose circle center coincides with a circle center of the inner circular arc surface 130, and the upper inclined surface 121 is tangentially connected to the outer circular arc surface 131.

As shown in FIG. 4, an inner wall of the lateral wing portion 14 has an inward convex portion 15 integrally formed with the lateral wing portion 14, that is, the lateral wing portion 14 and inward convex portion 15 are obtained together during cold extrusion molding. However, an inner diameter of the inward convex portion 15 through the cold extrusion molding does not reach a predetermined inner diameter. A purpose of this design is to improve the demolding efficiency while reducing the subsequent rolling difficulty under a condition of relatively favorable demolding, such as, it is possible to prevent cracks or severe radial deformation of the lateral wing portion 14 caused by deep roll-pressing. Aposition at the outer wall of the lateral wing portion 14 opposite to the inward convex portion 15 is formed with a roll-pressed annular groove 16 formed by roll-pressing to make the inner diameter of the inward convex portion 15 be reduced.

As shown in in FIG. 4, a dotted line at inward convex portion 15 is the inward convex portion 15 after the integrally molding, and a solid line is inward convex portion 15 after roll-pressing. For example, the inner diameter of inward convex portion 15 before the roll-pressing is 89 millimeters (mm), and the inner diameter of the inward convex portion 15 after the roll-pressing is 88 mm. The structural strength of the product can be ensured by this way of subsequent supplement.

In addition, the lateral wing portion 14 of this embodiment is arranged in a downwardly inclined and outward extended manner, and an inclination angle of the lateral wing portion 14 is the same as an inclination angle of the lateral inclined wing portion 11, that is, the lateral wing portion 14 and the lateral inclined wing portion 11 both are conical cylindrical structures, and axial lines of the lateral wing portion 14 and the lateral inclined wing portion 11 coincide.

### Second embodiment

A structure and a working principle of a pulp molded container cover according to this embodiment are basically the same as that of the first embodiment. The different structure is that, as shown in FIG. 5, an outer wall of the lateral wing portion 14 is formed with a roll-pressed annular groove 16 formed by roll-pressing, and a position at the inner wall of the lateral wing portion 14 opposite to the roll-pressed annular groove 16 is formed with a roll-pressed inner convex portion 17 formed by a formation of the roll-pressed annular groove 16.

### Third embodiment

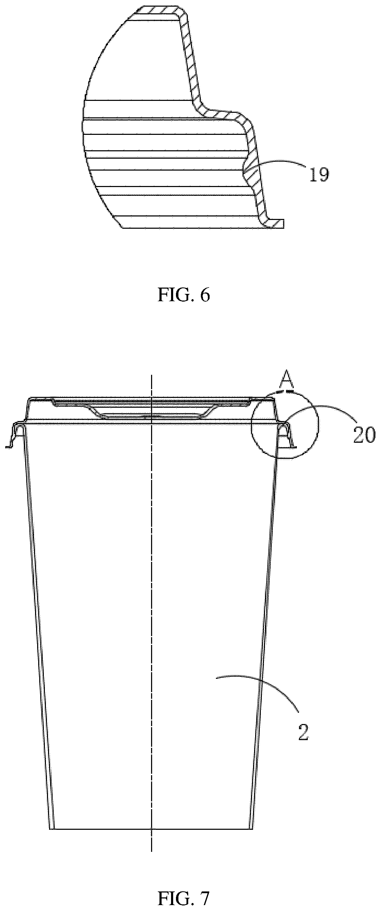

A structure and a working principle of a pulp molded container cover according to this embodiment are basically the same as that of the first embodiment. The different structure is that, as shown in FIG. 6, the inner wall of the lateral wing portion 14 is formed with an inner convex portion 19 integrally formed with the lateral wing portion 14, and an inner diameter of the inner convex portion is integrally formed in place (i.e., the inner diameter is the predetermined diameter).

### Fourth embodiment

A structure and a working principle of a pulp molded container cover according to this embodiment are basically the same as that of the first embodiment. The different structure is that, the lateral wing portion 14 is vertically downward extended (that is, the lateral wing portion 14 is parallel to an axial line of the container cover).

### Fifth embodiment

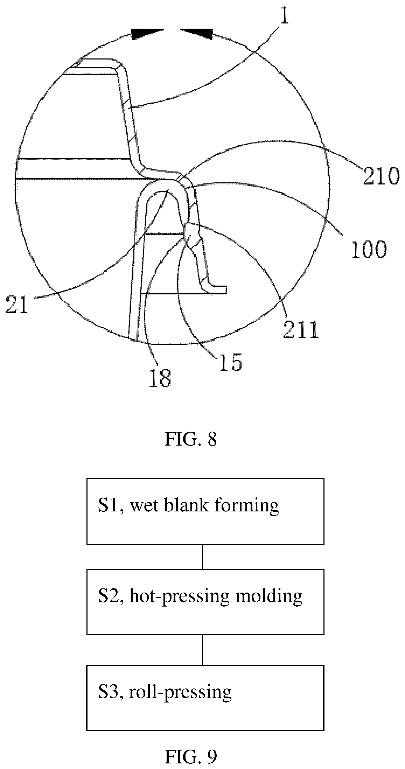

As shown in FIG. 7 and FIG. 8, this embodiment provides a pulp molded container assembly, including a container 2, and a top open end of the container 2 is disposed with an internal coupling arc portion 21 curled outward. The pulp molded container assembly further includes the pulp molded container cover 1 of the first embodiment. The pulp molded container cover 1 is disposed covering the top open end of the container 2, and the internal coupling arc portion 21 is continuously abutted against and sealed with the continuous sealing surface 100 of the pulp molded container cover 1.

The internal coupling arc portion 21 has an upper circular arc surface 210, the lower inclined surface 120 of the continuous sealing surface 100 is tangent to the upper circular arc surface 210, and the inner circular arc surface 130 and the upper circular arc surface 210 are matched with each other.

A side of the internal coupling arc portion 21 facing away from the container 2 abuts against the inward convex portion 15 or the roll-pressed inner convex portion 17.

The side of the internal coupling arc portion 21 facing away from the container 2 is disposed with an abutting upright surface 211, the inward convex portion 15 or the roll-pressed inner convex portion 17 is disposed with an inward protruded arc convex surface 18, and the abutting upright surface 211 is in tangential contact with the inward protruded arc convex surface 18.

The above combination method can realize the face-to-face sealing of the coupling portion, with good sealing performance.

In addition, the abutting upright surface 211 abuts against the inward protruded arc convex surface 18, which can prevent the falling off of the cover and further improve the sealing performance. After the abutting upright surface 211 abuts against the inward protruded arc convex surface 18, the abutting upright surface 211 is in a non-upright state, because the abutment will cause deformation of the side of the internal coupling arc portion 21 where the abutting upright surface 211 is disposed.

### Sixth embodiment

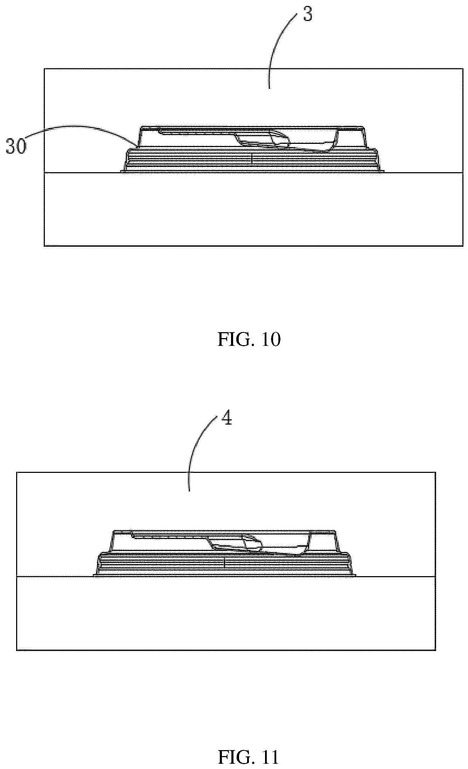

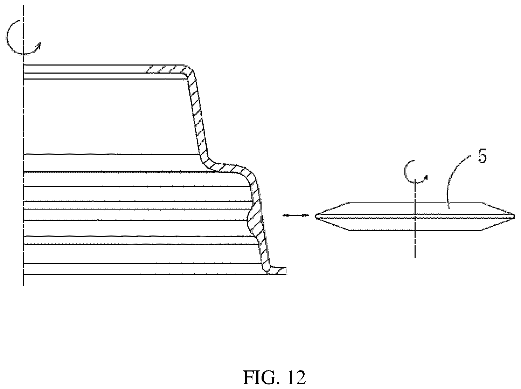

As shown in FIG. 9 to FIG. 12, this embodiment provides a processing method for processing the pulp molded container cover according to one of the first embodiment, the second embodiment, the third embodiment, or the fourth embodiment. The processing method includes the following steps including step S1 to step S3.

Step S1, wet blank forming. Specifically, a wet blank container cover is obtained by sucking slurry and performing cold extrusion molding by using a cold extrusion die 3. The lower inclined surface 120 and the inner circular arc surface 130 of the wet blank container cover are connected to form the continuous sealing surface 100 that is continuously sealed with the container top portion 20, the inward convex portion 15 is directly formed on the lateral wing portion 14 of the wet blank container cover, and the arc length of the inner circular arc surface 130 is longer than the length of the lower inclined surface 120.

The cold extrusion die 3 includes an upper die and a lower die.

Step S2, hot-pressing molding. Specifically, a semi-finished pulp molded container cover (i.e., pulp molded container cover to be roll-pressed) is obtained by performing hot-pressing molding on the wet blank container cover by using a hot-pressing die 4. The hot-pressing die 4 includes an upper hot-pressing die and a lower hot-pressing die.

Step S3, roll-pressing. Specifically, an axial line of the roller 5 is parallel to an axial line of the semi-finished pulp molded container cover, and the roller 5 is in contact with the outer wall of the lateral wing portion 14, the roller 5 is rotated and the outer wall of the lateral wing portion 14 is pressed with the roller 5, the semi-finished pulp molded container cover is rotated about the axial line of the semi-finished pulp molded container cover, thereby obtaining the roll-pressed annular groove 16 formed the outer wall of the lateral wing portion 14 and reducing the inner diameter of the inward convex portion 15 under roll-pressing of the roller 5 to complete the processing to thereby obtain the pulp molded cover 1. The roller 5 is driven to rotate by a servo motor.

During the rolling, the roller 5 may be fed in a radial direction of the cover gradually during rotating, or may be in an initial state in which the roller 5 is directly fed in place.

A water-absorbing material layer 30 is disposed on a molding cavity wall of the cold extrusion die 3. The water-absorbing material layer 30 is made of water-absorbing resin and so on, which can directly absorb the moisture of the wet blank after the wet blank is formed. The moisture absorption of the wet blank greatly shortens a time period of the subsequent hot-pressing molding, which not only saves energy, but also greatly improves the production efficiency.

The processing method of this embodiment further includes wet blank trimming. After the wet blank container cover is formed in the step S1, an excess edge of the wet blank container cover is cut by using an edge cutting knife disposed on the cold extrusion die 3. The edge can be cut directly during the cold extrusion molding, or it can be cut after the cold extrusion molding. The edge cut after molding requires lifting power to drive the edge cutting knife to lift, that is, to cut when the molding is closed.

The edge cutting knife is arranged on an edge of the formed container cover, and the excess edge is cut off directly after the wet blank container cover is formed, which can directly omit the heating of the excess edge during the subsequent hot pressing, save energy and greatly shorten the processing time of the container cover during the hot pressing.

In addition, the excess edge is cut off in a state of wet blank container cover, and the removed excess edge is recycled and reused without being performed hot pressing. This method greatly reduces the processing difficulty of subsequent recycling and reuse, and reduces the cost of recycling and reuse.

During the cold extrusion molding, it can be a single wet blank container cover, or multiple wet blank container covers arranged in an array and connected to each other as a whole plate. The cutting of excess edges forms multiple independent wet blank container covers.

The specific embodiments described herein are merely illustrative of the principle of the invention. Those skilled in the art to which the invention pertains may make various modifications or supplements, or substitutions in similar manner to the described specific embodiments without departing from the principle of the invention or exceeding the scope defined in the appended claims.

## Claims

1. A pulp molded container cover, comprising: a cover top portion (10); and a lateral inclined wing portion (11), connected to an outer edge of the cover top portion (10); wherein the pulp molded container cover further comprises:
an outward downwardly inclined portion (12), connected to a lower side of the lateral inclined wing portion (11), wherein an acute included angle (a) is formed between the outward downwardly inclined portion (12) and an axial line of the lateral inclined wing portion (11);
an external coupling arc portion (13), connected to an outer edge of the outward downwardly inclined portion (12); and
a lateral wing portion (14), connected to a lower side of the external coupling arc portion (13) facing away from the outward downwardly inclined portion (12);
wherein a lower inclined surface (120) of the outward downwardly inclined portion (12) and an inner circular arc surface (130) of the external coupling arc portion (13) are connected to form a continuous sealing surface (100) continuously face-to-face sealed with a container top portion (20).

2. The pulp molded container cover according to claim 1, wherein an arc length of the inner circular arc surface (130) is longer than a length of the lower inclined surface (120).

3. The pulp molded container cover according to claim 1, wherein the lower inclined surface (120) is tangentially connected to the inner circular arc surface (130).

4. The pulp molded container cover according to claim 1, wherein the outward downwardly inclined portion (12) has an upper inclined surface (121) parallel to the lower inclined surface (120).

5. The pulp molded container cover according to claim 4, wherein the external coupling arc portion (13) has an outer circular arc surface (131), a circle center of the outer circular arc surface (131) coincides with a circle center of the inner circular arc surface (130), and the upper inclined surface (121) is tangentially connected to the outer circular arc surface (131).

6. The pulp molded container cover according to claim 1, wherein an inner wall of the lateral wing portion (14) has an inward convex portion (15) integrally formed with the lateral wing portion (14), and a position at an outer wall of the lateral wing portion (14) opposite to the inward convex portion (15) is formed with a roll-pressed annular groove (16) formed by roll-pressing to make an inner diameter of the inward convex portion (15) be reduced.

7. The pulp molded container cover according to claim 1, wherein a position at the inner wall of the lateral wing portion (14) opposite to the roll-pressed annular groove (16) is formed with a roll-pressed inner convex portion (17) by roll-pressing the roll-pressed annular groove (16).

8. The pulp molded container cover according to claim 6 or claim 7, wherein the lateral wing portion (14) is arranged in a downwardly inclined and outward extended manner, and an inclination angle of the lateral wing portion (14) is the same as an inclination angle of the lateral inclined wing portion (11).

9. The pulp molded container cover according to claim 6 or claim 7, wherein the lateral wing portion (14) is vertically downward extended.

10. A pulp molded container assembly, comprising a container (2);
wherein a top open end of the container (2) is disposed with an internal coupling arc portion (21) curled outward;
wherein the pulp molded container assembly further comprises the pulp molded container cover (11) according to any of claims 1 to 9, the pulp molded container cover (11) is disposed covering the top open end of the container (2), and the internal coupling arc portion (21) is continuously abutted against and sealed with the continuous sealing surface (100) of the pulp molded container cover (11).

11. The pulp molded container assembly according to claim 10, wherein the internal coupling arc portion (21) has an upper circular arc surface (210), the lower inclined surface (120) of the continuous sealing surface (100) is tangent to the upper circular arc surface (210), and the inner circular arc surface (130) and the upper circular arc surface (210) are matched with each other.

12. The pulp molded container assembly according to claim 10, wherein a side of the internal coupling arc portion (21) facing away from the container (2) abuts against one of the inward convex portion (15) and a roll-pressed inner convex portion (17) formed at the inner wall of the lateral wing portion (14).

13. The pulp molded container assembly according to claim 12, wherein the side of the internal coupling arc portion (21) facing away from the container (2) is disposed with an abutting upright surface (211), the one of the inward convex portion (15) and the roll-pressed inner convex portion (17) is disposed with an inward protruded arc convex surface (18), and the abutting upright surface (211) is in tangential contact with the inward protruded arc convex surface (18).

14. A processing method of the pulp molded container cover according to any one of claims 1 to 9, comprising:
step S1, wet blank forming, comprising: sucking slurry and performing cold extrusion molding by using a cold extrusion die (3) to obtain a wet blank container cover, wherein the lower inclined surface (120) and the inner circular arc surface (130) of the wet blank container cover are connected to form the continuous sealing surface (100) continuously sealed with the container top portion (20), the lateral wing portion (14) of the wet blank container cover is directly molded with the inward convex portion (15), and an arc length of the inner circular arc surface (130) is longer than a length of the lower inclined surface (120);
step S2, hot-pressing molding, comprising: performing hot-pressing molding on the wet blank container cover to obtain a semi-finished pulp molded container cover by using a hot-pressing die (4); and
step S3, roll-pressing, comprising: making an axial line of a roller (5) parallel to an axial line of the semi-finished pulp molded container cover and making the roller (5) be in contact with the outer wall of the lateral wing portion (14), rotating the roller (5) and pressing the outer wall of the lateral wing portion (14) with the roller (5), and making the semi-finished pulp molded container cover rotate about the axial line of the semi-finished pulp molded container cover, thereby obtaining the roll-pressed annular groove (16) formed on the outer wall of the lateral wing portion (14) and reducing the inner diameter of the inward convex portion (15) under roll-pressing of the roller (5) to obtain the pulp molded container cover (1).

15. The processing method according to claim 14, further comprising:
wet blank trimming, comprising: cutting off an excess edge of the wet blank container cover by an edge cutting knife disposed on the cold extrusion die (3) after the wet blank container cover is formed in the step S1.

16. The processing method according to claim 14, wherein a molding cavity wall of the cold extrusion die (3) is disposed with a water-absorbing material layer (30).
